# EUROPEAN PATENT SPECIFICATION

(11) **EP 2 028 485 B1**
(45) Date of publication and mention of the grant of the patent: **31.07.2013**
(21) Application number: 08162740.8
(22) Date of filing: 21.08.2008
(51) Int. Cl.: G01N 30/12, G01N 30/20, G01N 30/46

(54) **Miniaturized gas chromatography module with pre-stage vaporizing unit**
Miniaturisiertes Gaschromatographiemodul mit Vorabverdampfungseinheit
Module chromatographique à gaz miniaturisé avec unité de vaporisation pré-étape

(30) Priority: 22.08.2007 WO PCT/EP2007/007386
(43) Date of publication of application: 25.02.2009
(73) Proprietor: Elster GmbH, 21079 Hamburg (DE)
(72) Inventor: Schmidt, Tobias, 23847, Steinhorst (DE); Klose, Volker, 21465, Wentorf (DE)
(74) Representative: Eisenführ, Speiser & Partner

(56) References cited:
- EP-A- 0 989 401
- WO-A-2004/065955
- DE-U1-202005 011 825
- US-A- 4 007 626
- US-A- 4 935 040
- US-A- 5 522 988
- US-A1- 2006 196 247

## Description

The invention relates to a miniaturized gas chromatography module according to the preamble of claim 1. The invention further relates to a method of analyzing a liquid substance using a miniaturized gas chromatography module according to the preamble of claim 7.

Devices and methods for gas chromatographical analysis are well-known. Such devices generally include large-scale separation columns and require significant amounts of the samples which are to be analyzed. Whereas the precision, resolution and the range of substances which can be analyzed of such conventional gas chromatographical devices and methods is excellent for a number of applications, the size of the device, the energy consumption and the time of the analysis is not satisfying the requirements of several applications wherein an analysis is desired in a quick and cost-efficient manner.

From EP 1 588 156 B1 and WO 2004/065955 A1 a miniaturized gas chromatograph is known allowing such quick and cost-efficient analysis of a variety of substances. The gas chromatograph consists of a miniaturized sample injector, a miniaturized separation column and a miniaturized thermal conductivity sensor.

US 5,522,988 discloses a conventional gas chromatograph having a liquid separation column through which a liquid sample to be analysed is passed before passing a valve and a subsequent heating element and a separation column. Whereas this technique might be used to additionally achieve information about the liquid substance in its liquid state it is not appropriate to provide sufficiently detailed analysis of the sample. An important drawback is that the amount of vaporized substance provided to said heating element may vary and thus will adversely affect the precision of measurement of the device.

Whereas a large number of samples can be analyzed with such miniaturized gas chromatograph, the need exists to provide miniaturized gas chromatographs having a higher precision and resolution than the prior art miniaturized gas chromatographs.

A further problem associated with prior art miniaturized gas chromatographs is due to the fact that only gaseous samples can be analyzed thus reducing the number of substances which can be analyzed significantly. Thus, the need exists to provide a miniaturized gas chromatograph allowing to analyze additional substances, in particular liquid substances.

A further problem associated with analysis of liquid samples is the time required for such analysis. It is desirable to provide an apparatus and a method which is capable to conduct analysis of liquid samples in a shorter time period than present GC systems.

According to the invention, a solution to the above-referenced problems is provided by providing a miniaturized gas chromatography module according to claim 1.

US 4,007,626 discloses a chromatographic analysis apparatus comprising a sample valve being adapted to inject a sample to be analyzed into a gaseous carrier stream flowing to a vaporizer column Further the sample valve is in serial arrangement with a vaporizer column, a solvent valve an upstream chromatographic column, an intermediate detector, a backflush valve, a downstream chromatographic column, and a downstream detector, The intermediate detector and the downstream detector can be a thermal conductivity detector.

The gas chromatography module according to the invention comprises a pre-stage, and a pre-stage module and a pre-stage thermal conductivity sensor. The pre-stage injector is adapted to separate or extract a small, pre-determined liquid amount from a continuous or quasi-continuous flow of a liquid substance which is to be analyzed. Thus, a liquid sample of this substance is provided which can be delivered to the other components of the module for analysis.

The liquid sample extracted by the pre-stage injector is delivered to the pre-stage module. This pre-stage miniaturized module may comprise a cavity like a small chamber, a channel, a plurality of chambers connected via channels or the like which are preferably provided in a wafer construction like two wafers bonded to each other after manufacturing the geometry of the chambers and channels in the surface of each wafer. The pre-stage module is adapted to transfer heat to the liquid sample flowing through the chambers, channels or the like to at least partially vaporize said sample. This can easily be achieved by connecting a heat element to the module or by heating the module itself, e.g. by electrical resistance heating.

It is to be understood that the liquid sample may comprise fractions having different boiling points and in such case fractions having low boiling point may be vaporized at an earlier point in time than fractions having a higher boiling point. The fractions may be directed subsequently to the thermal conductivity sensor. It is particularly preferred that all fractions of the liquid substance are vaporized simultaneously or almost simultaneously to allow the analysis of the whole substance in short time.

However, according to the invention, the process of vaporisation and subsequent analysis may be controlled in an improved manner. Since the thermal conductivity sensor provides information about some or all of the fractions as soon as they are vaporized and pass said sensor, this will allow to either use the signal of said sensor to optimize the process of vaporisation or to selectively analyse specific fractions of the substance.

According to a first preferred embodiment, a control unit is provided, wherein said pre-stage thermal conductivity sensor is connected to said control unit to provide signals to the control unit and wherein further said gas injector unit is connected to said control unit to receive signals from said control unit, wherein said control unit is adapted to switch said gas injector if the signal received from said pre-stage thermal conductivity sensor signalises a predetermined fraction of the vaporized liquid to have passed the pre-stage thermal conductivity sensor. This will allow that the gas injector is switched if a signal received from said pre-stage thermal conductivity sensor signalises said predetermined fraction of the vaporized liquid to have passed the pre-stage thermal conductivity sensor and to thus precisely switch the gas injector if the liquid to be analysed is vaporized. It is to be understood that preferably a single switching action of the gas injector is used to inject a part of the completely vaporized liquid into the separation column to analyse the sample.

According to the first preferred embodiment, the samples are taken from a continuous flow of a liquid substance. The pre-stage injector thus requires specific dimensions of its channels and functional elements like a switching element moveable within an injector housing or the like. Using such specifically adapted injector, a small, pre-determined amount of the liquid substance is extracted from the continuous flow and delivered to the pre-stage miniaturized module. It is to be understood that preferably the injector is designed to store a specific amount of the sample in a first position and to provide said specific amount in a second position. In such case, a high precision of the amount can be achieved without the need to precisely control the switching times of the injector.

The pre-stage module is adapted to transfer an amount of heat to this liquid sample which is sufficient to partially or completely vaporize the liquid sample. For this purpose, the pre-stage module may comprise a heated chamber, into which the liquid sample is delivered and wherein the liquid sample is vaporized or the pre-stage module may comprise a heated channel through which the liquid sample is flowing and along which the liquid sample is vaporized.

It is to be understood that the vaporization of the liquid sample results in a significant expansion process, thus producing a large volume of the substance which is to be analyzed. Usually, such large volume cannot be used to be introduced directly into a separation column because it lacks a well-defined beginning and end and will extend along a too long length section of the separation column, thus reducing the precision and resolution of the analysis. However, it should be understood that by further improvement of the pre-stage injector allowing to extract a very small liquid amount from the continuous flow of the liquid substance and by defining a well-defined beginning and end of the vaporized volume in the pre-stage miniaturized module it may be possible to even directly insert the vaporized sample volume extracted by the pre-stage injector into a separation column for analyzing the substance.

However, it is preferred to deliver the vaporized substance to the gas injector unit in order to extract a well-defined small volume like a fraction or a part of a fraction from this vaporized sample volume which will allow a precise analysis of the substance in the subsequent separation step and detection step. The gas injector unit and/or the pre-stage injector may be designed as described in EP 1 588 156 B1 as mentioned in the introductory portion of this description or may be of any further improved design. It is to be understood that the gas injector unit may be controlled in such a way to extract the sample to be taken from the vaporized sample at a specific time since this sample is not taken from a continuous flow of a substance but from a limited volume as provided by the pre-stage injector.

Subsequently, the sample extracted by the gas injector unit is delivered to the separation column and further separated into several fractions therein which are subsequently detected by the thermal conductivity sensor arranged behind and related to the separation column to identify the type of molecules or atoms contained in the substance to be analyzed. Thus, according to the invention, a miniaturized gas chromatography module is provided which is capable of analyzing liquid substances in a fast and cost-efficient manner.

According to a second preferred embodiment a control unit is provided, wherein said pre-stage thermal conductivity sensor is connected to said control unit to provide signals to the control unit and wherein further said pre-stage module is connected to said control unit to receive signals from said control unit, wherein said control unit is adapted to analyse the distribution of the fractions of vaporized substance flowing through the pre-stage thermal conductivity sensor and wherein further said control unit is adapted to control the amount of heat transferred to the liquid substance flowing through the pre-stage module depending on said distribution of the fractions of vaporized substance.

This will allow to analyse the distribution of the fractions of vaporized substance flowing through the pre-stage thermal conductivity sensor and to control the amount of heat transferred to the liquid substance flowing through the pre-stage module depending on said distribution of the fractions of vaporized substance.
According to this embodiment it is possible to precisely control the amount of temperature transferred to the liquid sample. It is to be understood that this may be achieved by controlling the temperature of the pre-stage module or to control the exposure time of the sample within the pre-stage module or to do both. By this, the temperature may be precisely set to shorten the exposure time without increasing the risk of thermal damage to the sample. This will allow rapid analysis of the sample.

According to this embodiment the signals transmitted from the thermal conductivity sensor to the control unit may contain information about the number of the fractions passing through the sensor, the amount of each fraction, the time difference between passing of the fractions, in particular subsequent fractions and the mass of specific fractions.

The foregoing preferred embodiment may be further improved in that said control unit is adapted to increase the amount of heat transferred to the liquid substance flowing through the pre-stage module if at least a first and a second fraction is determined and a predetermined time interval is exceeded between passing of said at first and said second fraction through the pre-stage thermal conductivity sensor. This will allow that the amount of heat transferred to the liquid substance flowing through the pre-stage module is increased if at least a first and a second fraction is determined and a predetermined time interval is exceeded between passing of said at first and said second fraction through the pre-stage thermal conductivity sensor.

According to further preferred embodiments the pre-stage gas injector comprises:
- a pre-stage injector carrier gas inlet connectable to a source of a carrier gas,
- a pre-stage injector waste outlet connectable to a waste exit or connectable to the source of the substance to be analysed,
- wherein the inlets and outlets are provided in an injector housing the housing further comprising
- a moveable injector body which can be moved from a first injector body position wherein the substance to be analysed is flowing from the pre-stage injector sample inlet through a sample storage section to the pre-stage waste outlet and a second injector body position wherein the carrier gas is flowing from the pre-stage injector carrier gas inlet through the sample storage section to the pre-stage injector sample outlet thus providing a predetermined amount of the substance to be analysed to the pre-stage injector sample outlet.

According to these embodiments, a miniaturized pre-stage injector or gas injector unit is provided allowing a cost-efficient and precise injection of a liquid or gaseous amount of a substance to be analyzed.

According to another aspect of the invention, a method for analyzing a substance according to claim 7 is provided.

According to this method of the invention it is possible to significantly improve the precision and cost efficiency of prior art analyzing methods of liquid substances.

The method is based on using miniaturized analyzing components. By providing steps which extract a predetermined liquid amount by a pre-stage injector and transferring heat to said liquid amount the precision of the analysis can be enhanced significantly, as described beforehand. The such partially or completely vaporized amount of the liquid substance to be analyzed is then provided to the inlet of the gas injector unit and analysis of this pre-determined amount is conducted as described above in the separation column and the thermal conductivity sensor.

Preferred embodiments of the invention are described referring to the figures. In the figures,
- Fig. 1: shows a schematical order of processes or the components associated to such respective processes for analysis of a liquid substance in a one stage separating process.
- Fig. 1a: shows a partial view of figure 1 in detail according to a first embodiment.
- Fig. 1b: shows a partial view of figure 1 in detail according to a second embodiment.
- Fig. 2: shows a schematical order of processes or the components associated to the respective processes for the analysis of a liquid substance in a two stage separating process, and
- Fig. 3: shows a schematical schematical diagram of a multi-stage analysis in a serial cascade of separation columns.

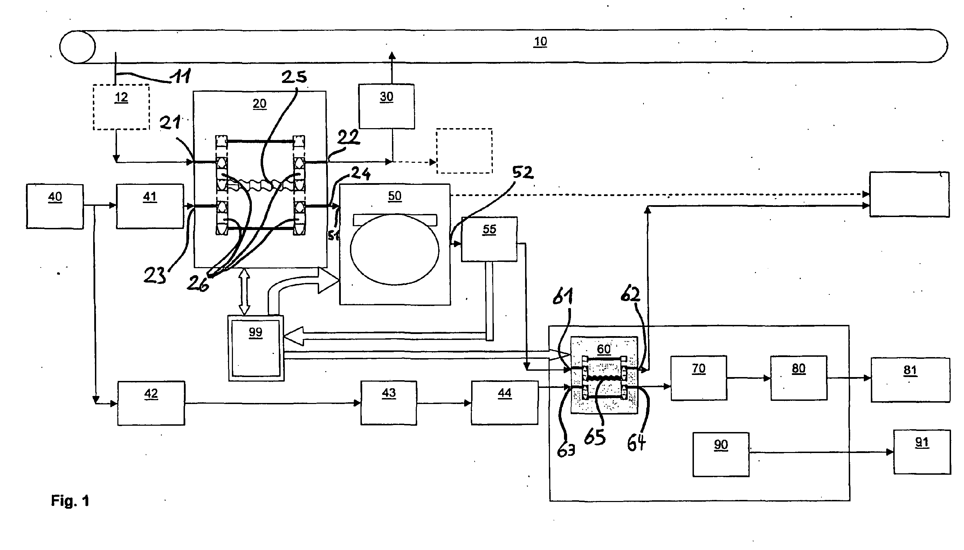

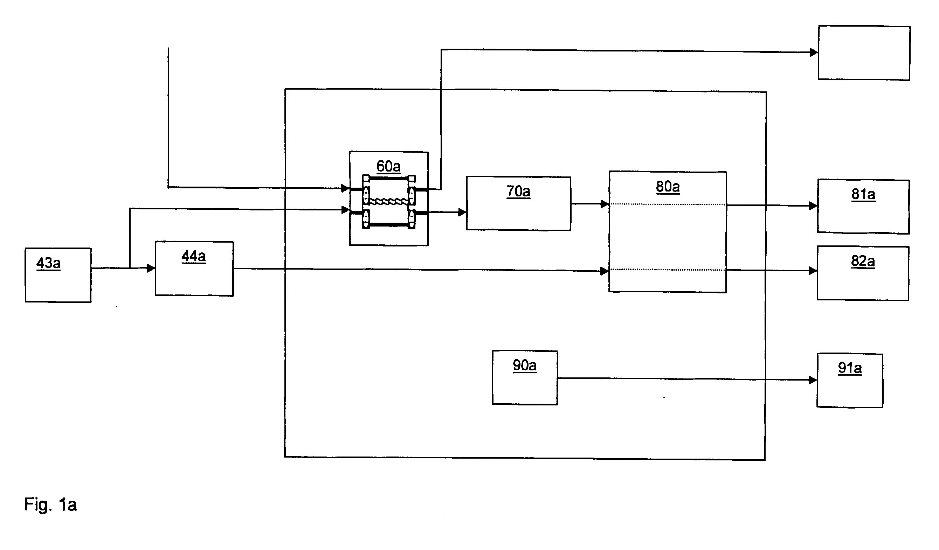

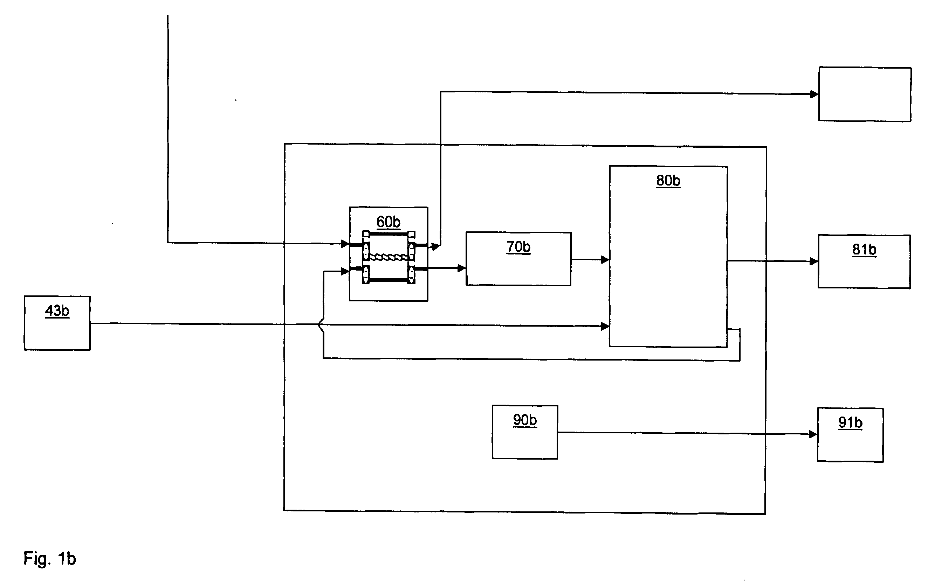

Referring first to Figure 1, a substance to be analyzed is flowing through a pipe 10 which may be a pipe involved in a process or a standard bypass coupled to such pipe.

Using a coupling 11, an inlet 21 of a micro fluid injector is coupled to the pipe 10, optionally including a sample pump 12 to pump the sample from the coupling 11 to the inlet 21, as depicted in dotted lines in Figure 1.

The micro fluid injector comprises an outlet 22 through which the sample can be redirected to be reintroduced into the pipe 10 using a sample pump 30. Further, the micro fluid injector comprises a carrier gas inlet 23 to which a source of a carrier gas 40, followed by a pressure regulator 41 is coupled. A sample outlet 24 of the micro fluid injector is connected to an inlet 51 of a miniaturized vaporizing unit 50.

The micro fluid injector further comprises a sample storage section 25 and an injector valve body 26 which can be switched from a first position wherein the substance is flowing from the inlet 21 via the storage section 25 to the outlet 22 to a second position wherein the sample stored in the sample storage section 25 is provided to the sample outlet 24 by directing carrier gas from the carrier gas inlet 23 through the sample storage section and pushing a predetermined amount of the sample stored in the sample storage section 25 to the sample outlet 24.

Said predetermined amount is provided to the miniaturized vaporizing unit 50 which comprises a heated surface transferring heat to the liquid substance and thus vaporizing the liquid substance. The such vaporized substance is directed via an outlet 52 of the miniaturized vaporizing unit to a thermal conductivity sensor 55. After flowing through said thermal conductivity sensor 55 the vaporized substance is directed to an inlet 61 of a gas injector 60. The gas injector 60 is designed in a similar way as the micro fluid injector 20, having a carrier gas inlet 63, a waste outlet 62 and a sample outlet 64 and a sample storage section 65. The carrier gas inlet 63 is coupled to the source of the carrier gas 40 via a pressure regulator 42, a particle filter 43 and an optional precolumn 44.

As shown, a control unit 99 is provided receiving signals from the thermal conductivity sensor 55. The control unit 99 may transmit and receive signals to /from the pre-stage injector 20 to control the switching times of the pre-stage injector or to receive information about said switching times. Further, the control unit transmits signals to the miniaturized vaporizing unit 50 to control temperature of said unit. Still further, the control unit 99 transmits signals to the gas injector 60 to control switching times of said gas injector. This will allow to selectively direct specific fractions detected by the thermal conductivity sensor to a separation column 70 by selectively switching the gas injector 60.

The gas injector 60 extracts a predetermined amount from the flow of the vaporized substance and provides this predetermined amount via the sample outlet 64 to the separation column 70 wherein this amount of the substance is separated into a plurality of fractions each fraction comprising molecules of a specific molecular weight or of specific molecular weight range.

The fractions are provided to a miniaturized further thermal conductivity sensor 80 and the thermal conductivity sensor 80 detects the time at which a fraction passes thus allowing to calculate a time interval between the switching of the injector to provide the sample to the separation column and the time at which a certain fraction passes the sensor. From this time interval a molecular weight (range) can be calculated associated to the fraction passing the sensor by comparing the time interval to a table associated to the properties of the separation column 70. Calculation is done in a central processing unit 90. The analyzed substance is directed to a carrier out 81 and the results are provided to a personal computer 91 for displaying or storing it.

Figure 1 a shows a detailed view of the lower right part of the embodiment shown in figure 1 in a first variant. As can be seen from figure 1a, the carrier gas is distributed behind the particle filter 43a and a first portion is directed to a precolumn 44a which serves to affect a parallel heating of the carrier gas as in the separation column 70a. Another portion of the carrier gas is directed to the gas injector 60a. The sample exiting gas injector 60a is guided via the separation column 70a to the thermal conductivity sensor 80a. In a parallel line the carrier gas exiting the pre-column 44a is directed to the thermal conductivity sensor 80a. Within the thermal conductivity sensor 80a, a first pair of measurement filaments is arranged with a second pair of reference filaments in a wheat stone bridge. The filaments are coupled in the wheat stone bridge in such a way that temperature variations are compensated in that the carrier gas exiting the per-column 44a are directed to the reference filaments whereas the sample gas exiting the separation column 70a are directed to the measurement filaments.

Hereafter, the sample gas is directed to the carrier out 81 a whereas the carrier gas exiting the thermal conductivity sensor 80a from the reference filaments is directed to an additional carrier gas exit 82a.

As described beforehand, a central processing unit 90a and a personal computer 91 a is provided.

Figure 1b shows an alternative embodiment to figure 1 a which may replace the arrangement shown in the lower right of figure 1. As shown in figure 1b a precolumn is not present but the carrier gas is directed from the particle filter 43b directly to the reference filaments of the thermal conductivity sensor 80b. After exiting the thermal conductivity sensor 80b, the carrier gas is directed to the carrier gas inlet of the injector 60b and used to force the sample to the separation column 70b to the thermal conductivity sensor 80b. The sample exits the thermal conductivity sensor 80b to the carrier out 81 b.

As described before, a central processing unit 90b coupled to a personal computer 91 b is provided.

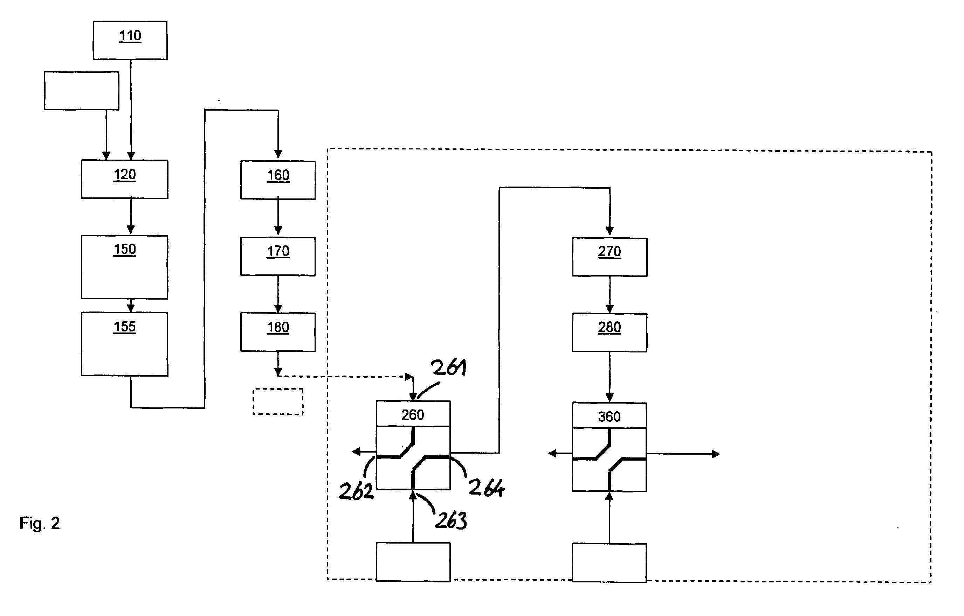

Figure 2 shows an improved arrangement and method for analyzing liquid substances. Method steps and components associated to such steps which are corresponding to those methods and components described in Figure 1 are provided with reference signs increased by 100 to those of Figure 1. As can be seen, a fluid sample 110 is provided to a micro fluid injector 120, from which predetermined amount is extracted from the continuous flow of the substance and this predetermined amount is provided to a miniaturized vaporizing unit 150.

From this miniaturized vaporizing unit 150 the vaporized substance is provided to a thermal conductivity sensor 155 and then to a gas injector 160, extracting a predetermined amount from this gaseous flow and providing the predetermined amount to a separation column 170. The separation column 170 separated the sample into a plurality of fractions which fractions are analyzed in a thermal conductivity sensor 180. It is to be understood that a control unit is not shown in Fig. 2 but may be present, as described beforehand.

The embodiment shown in Figure 2 differs from that of Figure 1 in that from the exit of the thermal conductivity sensor 180 the fractions are not directed to a sample outlet, i.e. a waste outlet, but instead are directed to a four port valve 260. The four port valve comprises an inlet 261 and an outlet 262 which are coupled to each other in a first position of the four port valve thus directing the fractions introduced into the inlet 261 to a waste exit. Further, a carrier gas inlet 263 is provided which is coupled to a sample outlet 264 in the first position of the four port valve.

The four port valve 260 can be switched to a second position wherein the sample inlet 261 is coupled to the sample outlet 264 thus directing a specific fraction or a specific plurality of fractions to the sample outlet. This specific fraction/these specific fractions is/are selected to be analyzed further. After the fractions have been directed to the sample outlet and have left the four port valve 260, the four port valve is switched back to the first position so that the carrier gas further pushes the fractions to a separation column 270.

The separation column 270 is designed to separate the fractions further and thus is specifically adapted to the molecular weight range of these fractions.

The such separated fractions, now being separated into a plurality of sub-fractions are provided to a thermal conductivity sensor 280 and thus the time difference between the arrival of each sub-fraction in the thermal conductivity sensor 280 and the time the four port valve was switched to the second position can be determined and from this time interval the molecular weight of the respective sub-fraction can be determined by comparing the time interval to pre-stored time intervals in a table corresponding to the properties of the separation column 270, as described beforehand.

Hereafter, the sample may be directed to a waste outlet thus finishing the analysis or a further four port valve 360 may be added to again extract one or more of the sub-fractions and direct these sub-fractions to a further separation column to provide additional analysis. It is to be understood that the such disclosed arrangement can be designed in a cascaded manner comprising a plurality of supplemental analyzing units each comprising a four port valve, a separation column and a thermal conductivity sensor.

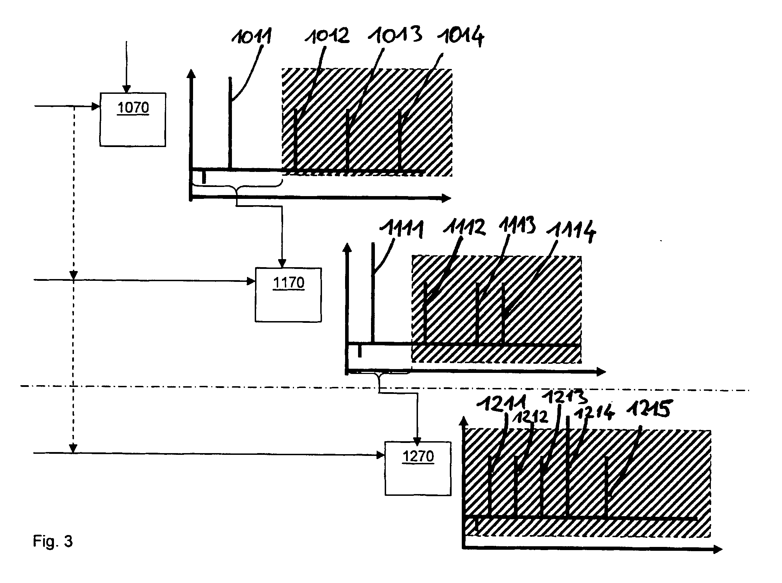

Figure 3 schematically depicts the principal of the serial analysis according to the invention. A first separation column 1070 separates a sample into a number of fractions 1011-1014.

Fractions 1012-1014 are sufficiently separated in the first separation column, e.g. by separating C₃H₈, C₄H₁₀ (propane, butane) and hydrocarbons of higher grade from each other. Fraction 1011 still contains a mixture of different substances and is provided to a second separation column 1170.

This second separation column 1170 is a packed column adapted to specifically separate within the molecular weight range of these substances . The second separation column 1170 separates fraction 1011 further in sub-fractions 1111-1114.

Sub-fractions 1112-1114 are sufficiently separated in the second separation column, e.g. by separating CH₄ , CO₂, C₂H₆. Sub fraction 1111 still comprises a mixture of different substances which are not sufficiently separated and is provided to a third packed separation column 1270 which further separates these substances into sub-sub-fractions 1211-1215. These sub-sub-fractions, e.g. N₂, O₂, CO, H₂ are the final result of the analysis and thus detailed information about substances of high molecular weight down to substances of very low molecular weights of the molecules contained in the substance provided to the separation column 1070 initially are provided to the user.

## Claims

1. Miniaturized gas chromatography module, comprising:
- a gas injector unit (60) having a gas injector sample inlet (61) and outlet (64), wherein the gas injector (60) further comprises
- a gas injector carrier gas inlet (63) connectable to a source of a carrier gas (40),
- a gas injector waste outlet connectable to a waste exit or connectable to the source of the substance to be analysed,
- wherein the inlets and outlets of the gas injector are provided in an injector housing the housing further comprising
- a moveable injector body which can be moved from a first injector body position wherein the substance to be analysed is flowing from the gas injector sample inlet through a sample storage section to the gas waste outlet and a second injector body position wherein the carrier gas is flowing from the gas injector carrier gas inlet through the sample storage section to the gas injector sample outlet thus providing a predetermined amount of the substance to be analysed to the gas injector sample outlet.
- a separation column (70) having a separation column inlet and outlet, the separation column inlet being in fluid communication with the gas injector sample outlet (64),
- a thermal conductivity sensor (80) having a sensor inlet and outlet, the sensor inlet being in fluid communication with the separation column outlet,
**characterized by**
- a pre-stage injector (20) having a pre-stage injector sample inlet (21) and outlet (24), the pre-stage injector sample inlet (21) being connectable with a source of a liquid substance to be analysed,
- a pre-stage module (50) having a module inlet (51) and outlet (52), the module inlet (51) being in fluid communication with the pre-stage injector sample outlet (24) and the module outlet (52) being in fluid communication with the gas injector sample inlet (61),
- wherein the pre-stage module (50) is adapted to transfer heat to the liquid substance flowing from the module inlet (51) to the module outlet (52) to at least partially vaporize said liquid substance, and
- a pre-stage thermal conductivity sensor (55) having an inlet coupled to the outlet (52) of the pre stage module outlet and an outlet being in fluid communication with the gas injector sample inlet (61), in particular being coupled to the gas injector simple inlet (61).

2. Module according to claim 1,
further comprising a control unit (99), wherein said pre-stage thermal conductivity sensor (55) is connected to said control unit (99) to provide signals to the control unit (99) and wherein further said gas injector unit (60) is connected to said control unit (99) to receive signals from said control unit (99), wherein said control unit (99) is adapted to switch said gas injector (60) if the signal received from said pre-stage thermal conductivity sensor (55) signalises a predetermined fraction of the vaporized liquid to have passed the pre-stage thermal conductivity sensor (55).

3. Module according to claim 1,
further comprising a control unit (99), wherein said pre-stage thermal conductivity sensor (55) is connected to said control unit (99) to provide signals to the control unit (99) and wherein further said pre-stage module (50) is connected to said control unit (99) to receive signals from said control unit (99), wherein said control unit (99) is adapted to analyse the distribution of the fractions of vaporized substance flowing through the pre-stage thermal conductivity sensor (55) and wherein further said control unit (99) is adapted to control the amount of heat transferred to the liquid substance flowing through the pre-stage module (50) depending on said distribution of the fractions of vaporized substance.

4. Module according to claim 3,
wherein said control unit (99) is adapted to increase the amount of heat transferred to the liquid substance flowing through the pre-stage module (50) if at least a first and a second fraction is determined and a predetermined time interval is exceeded between passing of said at first and said second fraction through the pre-stage thermal conductivity sensor (55).

5. Module according to claim 1,
wherein the pre-stage injector (20) is adapted to provide a predetermined amount of a liquid substance to the pre-stage module.

6. Module according to any of the preceding claims,
wherein the pre-stage injector (20) further comprises
- a pre-stage injector carrier gas inlet (23) connectable to a source (40) of a carrier gas,
- a pre-stage injector waste outlet connectable to a waste exit or connectable to the source of the substance to be analysed,
- wherein the inlets and outlets are provided in an injector housing the housing further comprising
- a moveable injector body (26) which can be moved from a first injector body position wherein the substance to be analysed is flowing from the pre-stage injector sample inlet (21) through a sample storage section (25) to the pre-stage waste outlet and a second injector body position wherein the carrier gas is flowing from the pre-stage injector carrier gas inlet (23) through the sample storage section (25) to the pre-stage injector sample outlet (24) thus providing a predetermined amount of the substance to be analysed to the pre-stage injector sample outlet (24).

7. A method of analysing a substance using a miniaturized gas chromatography module according to claim 1, comprising the steps of:
- providing a flow of a gaseous substance to a gas injectors sample inlet (61) of a gas injector unit (60),
- extracting a predetermined amount from the flow of the substance by the gas injector unit (60) and providing said amount from a gas injector sample outlet (64) to a separation column inlet of a separation column (70),
- separating said amount into a plurality of fractions of the substance by the separation column (70) and providing said fractions to a sensor inlet of a thermal conductivity sensor (80),
- determining the time intervals between the time at which the extracted amount of the substance was provided from the gas injector to the separation column (70) and the time at which each fraction passes the thermal conductivity sensor (80),
- comparing the time intervals with pre-known time intervals stored in a list associated with pre-known substances and thus identifying the substance contained in each fraction,
**characterized in that** before providing the gaseous substance to the gas injector unit (60) the steps of
- providing a continuous flow of a liquid substance to a pre-stage injector inlet (21) of a pre-stage injector (20),
- extracting a predetermined amount from said continuous flow of said liquid substance by the pre-stage injector (20) and providing said amount to a module inlet (51) of a pre-stage module (50),
- transferring heat from a surface of the pre-stage module (50) to said amount of said liquid substance to at least partially vaporize said liquid substance,
- providing said at least partially vaporized substance from an outlet (52) of said pre-stage module (50) to a pre-stage thermal conductivity sensor (55),
- detecting fractions of said at least partially vaporized substance in said pre-stage thermal conductivity sensor (55), and
- providing said at least partially vaporized substance as said gaseous substance from an outlet of said pre-stage thermal conductivity sensor (55) to said inlet (61) of said gas injector inlet,
are conducted.

8. Method according to claim 7,
said gas injector (60) is switched if a signal received from said pre-stage thermal conductivity sensor (55) signalises a predetermined fraction of the vaporized liquid to have passed the pre-stage thermal conductivity sensor (55).

9. Method according to claim 7 or 8,
wherein the distribution of the fractions of vaporized substance flowing through the pre-stage thermal conductivity sensor (55) is analysed and the amount of heat transferred to the liquid substance flowing through the pre-stage module (50) is controlled depending on said distribution of the fractions of vaporized substance.

10. Method according to claim 9,
wherein the amount of heat transferred to the liquid substance flowing through the pre-stage module (50) is increased if at least a first and a second fraction is determined and a predetermined time interval is exceeded between passing of said at first and said second fraction through the pre-stage thermal conductivity sensor (55).

## Patentansprüche

1. Miniaturisiertes Gaschromatographie-Modul, umfassend:
- eine Gasinjektoreinheit (60), welche einen Gasinjektor-Proben-Einlass (61) und -Auslass (64) aufweist, wobei der Gasinjektor (60) weiter umfasst:
- einen Gasinjektor-Trägergas-Einlass (63), welcher mit einer Trägergasquelle (40) verbindbar ist,
- einen Gasinjektor-Abfall-Auslass, welcher mit einem Abfallausgang oder einer Quelle der zu analysierenden Substanz verbindbar ist,
- wobei die Einlässe und Auslässe des Gasinjektors in einem Injektorgehäuse bereitgestellt sind, wobei das Injektorgehäuse weiter umfasst
- einen beweglichen Injektorkörper (26), welcher bewegt werden kann aus einer ersten Injektorkörperposition, in welcher die zu analysierende Substanz von dem Gasinjektor-Proben-Einlass durch einen Probenspeicherabschnitt zu dem Gasabfallauslass fließt, und einer zweiten Injektorkörperposition, in welcher das Trägergas von dem Gasinjektor-Trägergas-Einlass durch den Probenspeicherabschnitt zu dem Gasinjektor-Proben-Auslass fließt, so dass eine vorgegebene Menge von zu analysierender Substanz dem Gasinjektor-Proben-Auslass bereitgestellt wird,
- eine Trennsäule (70) mit einem Trennsäuleneinlass und -auslass, wobei der Trennsäuleneinlass in Fluidkommunikation mit dem Gasinjektor-Proben-Auslass (64) ist,
- einen Wärmeleitfähigkeitssensor (80) mit einem Sensoreinlass und - auslass, wobei der Sensoreinlass in Fluidkommunikation mit dem Trennsäulenauslass ist,
**gekennzeichnet durch**
- einen Vorstufeninjektor (20) mit einem Vorstufeninjektor-Proben-Einlass (21) und -Auslass (24), wobei der Vorstufeninjektor-Proben-Einlass (21) mit der Quelle der zu analysierenden flüssigen Substanz verbindbar ist,
- ein Vorstufen-Modul (50) mit einem Moduleinlass (51) und -auslass (52), wobei der Moduleinlass (51) in Fluidkommunikation mit dem Vorstufeninjektor-Proben-Auslass (24) ist und wobei der Modulauslass (52) in Fluidkommunikation mit dem Gasinjektor-Proben-Einlass (61) ist,
- wobei das Vorstufenmodul (50) ausgebildet ist, Wärme auf die flüssige Substanz zu übertragen, welche von dem Moduleinlass (51) zu dem Modulauslass (52) fließt, um die flüssige Substanz wenigstens teilweise zu vaporisieren, und
- einen Vorstufen-Wärmeleitfähigkeitssensor (55) mit einem Einlass, welcher mit dem Auslass (52) des Vorstufen-Modul-Auslasses gekoppelt ist und mit einem Auslass, welcher in Fluidkommunikation mit dem Gasinjektor-Proben-Einlass (61) ist, insbesondere mit dem Gasinjektor-Proben-Einlass (61) gekoppelt ist.

2. Modul nach Anspruch 1,
weiter umfassend eine Steuereinheit (99), wobei der Vorstufen-Wärmeleitfähigkeitssensor (55) mit der Steuereinheit (99) verbunden ist, um der Steuereinheit (99) Signale bereitzustellen und wobei weiter die Gasinjektoreinheit (60) weiter verbunden ist mit der Steuereinheit (99), um Signale von der Steuereinheit (99) zu empfangen, wobei die Steuereinheit (99) ausgebildet ist, den Gasinjektor (60) zu schalten, falls das Signal, welches von dem Vorstufen-Wärmeleitfähigkeitssensor (55) empfangen wird, signalisiert, dass ein vorgegebener Anteil der vaporisierten Flüssigkeit den Vorstufen-Wärmeleitfähigkeitssensor (55) passiert hat.

3. Modul nach Anspruch 1,
weiter umfassend eine Steuereinheit (99), wobei der Vorstufen-Wärmeleitfähigkeitssensor (55) mit der Steuereinheit (99) verbunden ist, um der Steuereinheit (99) Signale bereitzustellen, und wobei weiter das Vorstufenmodul (50) mit der Steuereinheit (99) verbunden ist, um Signale von der Steuereinheit (99) zu empfangen, wobei die Steuereinheit (99) ausgebildet ist, die Verteilung der Anteile von vaporisierter Substanz zu analysieren, welche durch den Vorstufen-Wärmeleitfähigkeitssensor (55) fließen, und wobei die Steuereinheit (99) weiter ausgebildet ist, die Menge an Wärme zu steuern, welche auf die flüssige Substanz übertragen wird, die durch das Vorstufenmodul (50) fließt, in Abhängigkeit der Verteilung der Anteile vaporisierter Substanz.

4. Modul nach Anspruch 3,
wobei die Steuereinheit (99) ausgebildet ist, die Wärmemenge zu erhöhen, welche auf die flüssige Substanz, die durch das Vorstufenmodul (50) fließt, übertragen wird, falls wenigstens ein erster und zweiter Anteil bestimmt wird und ein vorgegebenes Zeitintervall zwischen dem Passieren des ersten und zweiten Anteils durch den Vorstufen-Wärmeleitfähigkeitssensor (55) überschritten wird.

5. Modul nach Anspruch 1,
wobei der Vorstufeninjektor (20) ausgebildet ist, dem Vorstufenmodul eine vorgegebene Menge einer flüssigen Substanz bereitzustellen.

6. Modul nach einem der vorstehenden Ansprüche,
wobei der Vorstufeninjektor (20) weiter umfasst
- einen Vorstufeninjektor-Trägergas-Einlass (23), welcher mit einer Trägergasquelle (40) verbindbar ist,
- einen Vorstufeninjektor-Abfall-Auslass, welcher mit einem Abfallausgang oder der Quelle der zu analysierenden Substanz verbindbar ist,
- wobei die Einlässe und Auslässe in einem Injektorgehäuse bereitgestellt sind, wobei das Injektorgehäuse weiter umfasst
- einen beweglichen Injektorkörper (26), welcher bewegt werden kann aus einer ersten Injektorkörperposition, in welcher die zu analysierende Substanz von dem Vorstufeninjektor-Proben-Einlass (21) durch einen Probenspeicherabschnitt (25) zu dem Vorstufen-Abfall-Auslass fließt, und einer zweiten Injektorkörperposition, in welcher das Trägergas von dem Vorstufeninjektor-Trägergas-Einlass (23) durch den Probenspeicherabschnitt (25) zu dem Vorstufeninjektor-Proben-Auslass (24) fließt, so dass dem Vorstufeninjektor-Proben-Auslass (24) eine vorgegebene Menge zu analysierender Substanz bereitgestellt wird.

7. Verfahren zur Analyse einer Substanz, welches ein miniaturisiertes Gaschromatographie-Modul nach Anspruch 1 verwendet, umfassend die Schritte:
- einem Gasinjektor-Proben-Einlass (61) einen Flusses einer gasartigen Substanz einer Gasinjektoreinheit (60) bereitzustellen,
- eine vorgegebene Menge des Flusses der Substanz durch die Gasinjektoreinheit (60) zu extrahieren und die Menge einem Trennsäuleneinlass einer Trennsäule (70) von einem Gasinjektor-Proben-Auslass (64) bereitzustellen,
- die Menge in eine Vielzahl von Anteile der Substanz durch die Trennsäule (70) zu separieren und einem Sensoreinlass eines Wärmeleitfähigkeitssensors (80) die Anteile bereitzustellen,
- die Zeitintervalle zwischen der Zeit, zu welcher die extrahierte Menge der Substanz von dem Gasinjektor der Trennsäule (70) bereitgestellt wurde, zu bestimmen und die Zeit, zu welcher jeder Anteil den Wärmeleitfähigkeitssensor (80) passiert, zu bestimmen,
- die Zeitintervalle mit vorbekannten Zeitintervallen, welche in einer mit vorbekannten Substanzen assoziierten Liste gespeichert sind, zu vergleichen und somit die Substanz, die in jedem Anteil vorhanden ist, zu identifizieren,
**dadurch gekennzeichnet, dass** bevor der Gasinjektoreinheit (60) die gasartige Substanz bereitgestellt wird, die Schritte ausgeführt werden:
- einem Vorstufeninjektoreinlass (21) eines Vorstufeninjektors (20) einen kontinuierlichen Fluss einer flüssigen Substanz bereitzustellen,
- eine vorgegebene Menge aus dem kontinuierlichen Fluss flüssiger Substanz durch den Vorstufeninjektor (20) zu extrahieren und einem Moduleinlass (51) eines Vorstufenmoduls (50) die Menge bereitzustellen,
- Wärme von einer Oberfläche des Vorstufenmoduls (50) auf die Menge der flüssigen Substanz zu übertragen, um die flüssige Substanz wenigstens teilweise zu vaporisieren,
- einem Vorstufen-Wärmeleitfähigkeitssensor (55) die wenigstens teilweise vaporisierte Substanz von einem Auslass (52) des Vorstufenmoduls (50) bereitzustellen,
- Anteile der wenigstens teilweise vaporisierten Substanz in dem Vorstufen-Wärmeleitfähigkeitssensor (55) zu erfassen, und
- dem Einlass (61) des Gasinjektoreinlasses die wenigstens teilweise vaporisierte Substanz als die gasartige Substanz von einem Auslass des Vorstufen-Wärmeleitfähigkeitssensors (55) bereitzustellen.

8. Verfahren nach Anspruch 7,
wobei der Gasinjektor (60) geschaltet wird, falls ein Signal, welches von dem Vorstufen-Wärmeleitfähigkeitssensor (55) empfangen wird, signalisiert, dass ein vorgegebener Anteil der vaporisierten Flüssigkeit den Vorstufen-Wärmeleitfähigkeitssensor (55) passiert hat.

9. Verfahren nach Anspruch 7 oder 8,
wobei die Verteilung der Anteile vaporisierter Substanz, welche durch den Vorstufen-Wärmeleitfähigkeitssensor (55) fließen, analysiert wird und die auf die flüssige Substanz übertragene Wärmemenge, welche durch das Vorstufenmodul (50) fließt, gesteuert wird in Abhängigkeit der Verteilung der Anteile vaporisierter Substanz.

10. Verfahren nach Anspruch 9,
wobei die auf die flüssige Substanz übertragene Wärmemenge, die durch das Vorstufenmodul (50) fließt, erhöht wird, falls wenigstens ein erster und ein zweiter Anteil bestimmt wird, und ein vorgegebenes Zeitintervall zwischen dem Passieren des ersten und zweiten Anteils durch den Vorstufen-Wärmeleitfähigkeitssensor (55) überschritten wird.

## Revendications

1. Module chromatographique à gaz miniaturisé, comprenant :
- une unité d'injecteur de gaz (60) possédant une entrée (61) et une sortie (64) d'échantillon d'injecteur de gaz,
dans lequel l'injecteur de gaz (60) comprend en outre
- une entrée de gaz porteur d'injecteur de gaz (63) raccordable à une source d'un gaz porteur (40),
- une sortie de vidange d'injecteur de gaz raccordable à une sortie de vidange ou raccordable à la source de la substance à analyser,
- dans lequel les orifices d'entrée et les orifices de sortie de l'injecteur de gaz sont disposés dans un logement d'injecteur, le logement comprenant en outre
- un corps d'injecteur mobile qui peut être déplacé d'une première position de corps d'injecteur dans laquelle la substance à analyser s'écoule depuis l'entrée d'échantillon d'injecteur de gaz à travers une section de stockage d'échantillon vers la sortie de vidange de gaz et une seconde position de corps d'injecteur dans laquelle le gaz porteur s'écoule depuis l'entrée de gaz porteur d'injecteur de gaz à travers la section de stockage d'échantillon jusqu'à la sortie d'échantillon d'injecteur de gaz, fournissant ainsi une quantité prédéterminée de la substance à analyser à la sortie d'échantillon d'injecteur de gaz ;
- une colonne de séparation (70) possédant une entrée et une sortie de colonne de séparation, l'entrée de colonne de séparation étant en communication fluide avec la sortie d'échantillon d'injecteur de gaz (64),
- un capteur de conductivité thermique (80) possédant une entrée et une sortie de capteur, l'entrée de capteur étant en communication fluide avec la sortie de colonne de séparation,
**caractérisé par**
- un injecteur de pré-étage (20) possédant une entrée (21) et une sortie (24) d'échantillon d'injecteur de pré-étage, l'entrée d'échantillon d'injecteur de pré-étage (21) étant raccordable à une source d'une substance liquide à analyser,
- un module de pré-étage (50) possédant une entrée (51) et de sortie (52) de module, l'entrée de module (51) étant en communication fluide avec la sortie d'échantillon d'injecteur de pré-étage (24) et la sortie de module (52) étant en communication fluide avec l'entrée d'échantillon d'injecteur de gaz (61),
- dans lequel le module de pré-étage (50) est conçu pour transférer de la chaleur vers la substance liquide s'écoulant depuis l'entrée de module (51) vers la sortie de module (52) pour vaporiser au moins partiellement ladite substance liquide, et
- un capteur de conductivité thermique de pré-étage (55) possédant une entrée couplée à la sortie (52) de la sortie de module de pré-étage et une sortie étant en communication fluide avec l'entrée d'échantillon d'injecteur de gaz (61), en particulier couplée à l'entrée d'échantillon d'injecteur de gaz (61).

2. Module selon la revendication 1,
comprenant en outre une unité de commande (99), dans lequel ledit capteur de conductivité thermique de pré-étage (55) est connecté à ladite unité de commande (99) pour fournir des signaux à l'unité de commande (99) et dans lequel en outre ladite unité d'injecteur de gaz (60) est connectée à ladite unité de commande (99) pour recevoir les signaux provenant de ladite unité de commande (99), ladite unité de commande (99) étant conçue pour commuter ledit injecteur de gaz (60) si le signal reçu dudit capteur de conductivité thermique de pré-étage (55) signale qu'une fraction prédéterminée du liquide vaporisé a traversé le capteur de conductivité thermique de pré-étage (55).

3. Module selon la revendication 1,
comprenant en outre une unité de commande (99), dans lequel ledit capteur de conductivité thermique de pré-étage (55) est connecté à ladite unité de commande (99) pour fournir des signaux à l'unité de commande (99) et dans lequel en outre ledit module de pré-étage (50) est connecté à ladite unité de commande (99) pour recevoir les signaux de ladite unité de commande (99), ladite unité de commande (99) étant conçue pour analyser la répartition des fractions de substance vaporisée s'écoulant à travers le capteur de conductivité thermique de pré-étage (55) et ladite unité de commande (99) étant conçue en outre pour contrôler la quantité de chaleur transférée à la substance liquide s'écoulant à travers le module de pré-étage (50) en fonction de ladite répartition des fractions de substance vaporisée.

4. Module selon la revendication 3,
dans lequel ladite unité de commande (99) est conçue pour augmenter la quantité de chaleur transférée à la substance liquide s'écoulant à travers le module de pré-étage (50) si au moins une première et une seconde fractions sont déterminées et si un intervalle de temps prédéterminé est dépassé entre le passage de ladite première et de ladite seconde fraction à travers le capteur de conductivité thermique de pré-étage (55).

5. Module selon la revendication 1,
dans lequel l'injecteur de pré-étage (20) est conçu pour fournir une quantité prédéterminée d'une substance liquide au module de pré-étage.

6. Module selon l'une quelconque des revendications précédentes,
dans lequel l'injecteur de pré-étage (20) comprend en outre
- une entrée de gaz porteur d'injecteur de pré-étage (23) raccordable à une source (40) d'un gaz porteur,
- une sortie de vidange d'injecteur de pré-étage raccordable à une sortie de vidange ou raccordable à la source de la substance à analyser,
- dans lequel les orifices d'entrée et les orifices de sortie sont disposés dans un logement d'injecteur, le logement comprenant en outre
- un corps d'injecteur mobile (26) qui peut être déplacé d'une première position de corps d'injecteur dans laquelle la substance à analyser s'écoule depuis l'entrée d'échantillon d'injecteur de pré-étage (21) à travers une section de stockage d'échantillon (25) vers la sortie de vidange de pré-étage et une seconde position de corps d'injecteur dans laquelle le gaz porteur s'écoule depuis l'entrée de gaz porteur d'injecteur de pré-étage (23) à travers la section de stockage d'échantillon (25) jusqu'à la sortie d'échantillon d'injecteur de pré-étage (24), fournissant ainsi une quantité prédéterminée de la substance à analyser à la sortie d'échantillon d'injecteur de pré-étage (24).

7. Procédé d'analyse d'une substance utilisant un module chromatographique à gaz miniaturisé selon la revendication 1, comprenant les étapes suivantes :
- la fourniture d'un flux d'une substance gazeuse à une entrée d'échantillon d'injecteur de gaz (61) d'une unité d'injecteur de gaz (60),
- l'extraction d'une quantité prédéterminée du flux de la substance par l'unité d'injecteur de gaz (60) et la fourniture de ladite quantité d'une sortie d'échantillon d'injecteur de gaz (64) à une entrée de colonne de séparation d'une colonne de séparation (70),
- la séparation de ladite quantité en une pluralité de fractions de la substance grâce à la colonne de séparation (70) et la fourniture desdites fractions à une entrée de capteur d'un capteur de conductivité thermique (80),
- la détermination des intervalles de temps entre le moment auquel la quantité extraite de la substance a été fournie par l'injecteur de gaz à la colonne de séparation (70) et le moment auquel chaque fraction traverse le capteur de conductivité thermique (80),
- la comparaison des intervalles de temps avec des intervalles de temps pré-connus stockés dans une liste associée aux substances pré-connues et ainsi, l'identification de la substance contenue dans chaque fraction,
**caractérisé par**, avant la fourniture de la substance gazeuse à l'unité d'injecteur de gaz (60), les étapes de
- fourniture d'un flux continu d'une substance liquide à une entrée d'injecteur de pré-étage (21) d'un injecteur de pré-étage (20),
- extraction d'une quantité prédéterminée dudit flux continu de ladite substance liquide par l'injecteur de pré-étage (20) et fourniture de ladite quantité à une entrée de module (51) d'un module de pré-étage (50),
- transfert de chaleur d'une surface du module de pré-étage (50) à ladite quantité de ladite substance liquide pour vaporiser au moins partiellement ladite substance liquide,
- fourniture de ladite substance au moins partiellement vaporisée d'une sortie (52) dudit module de pré-étage (50) à un capteur de conductivité thermique de pré-étage (55),
- détection de fractions de ladite substance au moins partiellement vaporisée dans ledit capteur de conductivité thermique de pré-étage (55), et
- fourniture de ladite substance au moins partiellement vaporisée en tant que ladite substance gazeuse d'une sortie dudit capteur de conductivité thermique de pré-étage (55) audit orifice d'entrée (61) dudit orifice d'entrée d'injecteur de gaz sont réalisées.

8. Procédé selon la revendication 7, dans lequel
ledit injecteur de gaz (60) est commuté si un signal reçu dudit capteur de conductivité thermique de pré-étage (55) signale qu'une fraction prédéterminée du liquide vaporisé a traversé le capteur de conductivité thermique de pré-étage (55).

9. Procédé selon la revendication 7 ou 8,
dans lequel la répartition des fractions de substance vaporisée s'écoulant à travers le capteur de conductivité thermique de pré-étage (55) est analysée et la quantité de chaleur transférée à la substance liquide s'écoulant à travers le module de pré-étage (50) est contrôlée en fonction de ladite répartition des fractions de substance vaporisée.

10. Procédé selon la revendication 9,
dans lequel la quantité de chaleur transférée à la substance liquide s'écoulant à travers le module de pré-étage (50) est augmentée si au moins une première et une seconde fractions sont déterminées et si un intervalle de temps prédéterminé est dépassé entre le passage de ladite au moins une première et de ladite au moins une seconde fractions à travers le capteur de conductivité thermique de pré-étage (55).
